# EUROPÄISCHE PATENTSCHRIFT

(11) **EP 1 101 634 B1**
(45) Veröffentlichungstag und Bekanntmachung des Hinweises auf die Patenterteilung: **03.12.2003**
(21) Anmeldenummer: 00810796.3
(22) Anmeldetag: 04.09.2000
(51) Int. Cl.: B60D 1/52

(54) **Anhängevorrichtung und Verfahren zur Herstellung einer solchen**
Towing device and method of manufacture thereof
Dispositif de remorquage et son procédé de fabrication

(30) Priorität: 18.11.1999 CH 210899
(43) Veröffentlichungstag der Anmeldung: 23.05.2001
(73) Patentinhaber: SCAMBIA INDUSTRIAL DEVELOPMENTS AKTIENGESELLSCHAFT, 9494 Schaan (LI)
(72) Erfinder: De Rooij, Werner H.J.A., 4844 TJ Terheiiden (NL); Som, Michiel Johannes Maria, 4931 KP Geertruidenberg (NL)
(74) Vertreter: Eder, Carl E.

(56) Entgegenhaltungen:
- EP-A- 0 455 251
- DE-U- 9 408 478
- DE-U- 29 613 056
- US-A- 4 747 612

## Beschreibung

Die Erfindung betrifft eine Anhängevorrichtung mit einem zum Befestigen an einem Kraftfahrzeug bestimmten Halter und einer Kugelstange. Die Kugelstange besitzt einen in den Halter einsetzbaren Schaft und ist in einem Befestigungszustand durch einen Bolzen, der mindestens einen Abschnitt des Halters und den Schaft quer zum letzteren durchdringt, abnehmbar am Halter befestigt. Wahlweise in einen Sicherungszustand und in einen Freigabezustand bringbare Sicherungsmittel können den Bolzen im Befestigungszustand der Kugelstange im Sicherungszustand gegen eine Trennung vom Halter sowie vom Schaft sichern und im Freigabezustand eine Trennung des Bolzens vom Schaft ermöglichen.

Solche Anhängevorrichtungen sind beispielsweise aus der DE 296 13 056 U bekannt. Die Sicherungsmittel der in diesem Dokument offenbarten Anhängevorrichtungen weisen ein sich weitgehend neben und/oder hinter dem Halter befindendes Betätigungsorgan auf, das aus einer Federgabel oder einem Schwenkarm besteht und quer zum Bolzen eine grosse Abmessung hat. Bei den Varianten mit dem Schwenkarm sind ferner noch seitlich an der Kugelstange angeordnete, sich im Befestigungszustand hinter dem Halter befindende, federnde und/oder bewegliche Rastteile vorhanden. Das Betätigungsorgan und die allfälligen zusätzlichen Rastteile sind anfällig auf Verschmutzungen sowie Beschädigungen, so dass die Sicherungsmittel störanfällig sind und nur eine kurze Lebensdauer haben. Die Montage der Sicherungsmittel am Halter und/oder an der Kugelstange erfordert zudem relativ aufwändige Arbeitsgänge, wobei zum Beispiel zusätzlich zu den für den Bolzen vorhandenen Löchern noch mindestens ein Loch im Halter und/oder in der Kugelstange hergestellt werden muss. Ausserdem sind die von einem Benutzer zu betätigenden Teile der Sicherungsmittel in der Praxis oft ziemlich schwer zugänglich hinter der Stossstange angebracht und verursachen beim Betätigen eine beträchtliche Verletzungsgefahr durch Einklemmen von Fingern und dergleichen.

Die DE 94 08 478 U offenbart eine Drehverriegelung für einen Handradantrieb einer Hubzahnstange. Ein Drehbolzen mit einem Handrad sowie einer Verzahnung und eine Hubzahnstange mit einer Verzahnung sind in einem Führungsgehäuse drehbar gelagert bzw. verschiebbar geführt. Eine Feder übt eine Kraft auf den Drehbolzen aus. Diese Kraft ist bestrebt, das Handrad gegen das Führungsgehäuse in eine Verriegelungsstellung zu ziehen, in der ein in der Nabe des Handrads befestigter Verriegelungsstift in ein Loch des Führungsgehäuses hineinragt. Die zum Lagern des Drehbolzens dienende, zylindrische Lagerfläche des Führungsgehäuses ist mit einer Ringnut versehen. Ein aus einer Kugel bestehendes Sicherungselement ist verschiebbar in einem radialen Loch des Drehbolzens geführt und kann in der Verriegelungsstellung des Drehbolzens mit Hilfe von einem im Handrad angeordneten Schubbolzenschloss in die genannte Ringnut des Führungsgehäuses 2 hineingedrückt werden und verhindert dann ein Herausziehen und Drehen des Handrads.

Der Drehbolzen dieser bekannten Drehverriegelung wird also nicht durch einen dauernd an einem Kraftfahrzeug befestigten Halter und den Schaft einer abnehmbar am Halter befestigten Kugelstange hindurch gesteckt und wieder auf dem Schaft sowie aus dem Halter herausgezogen, sondern verbleibt dauernd im Führungsgehause. Nun ist in der zitierten Gebrausmusterschrift zwar erwahnt, dass die Drehverriegelung zum Beispiel bei einem abnehmbaren Kugelträger eingesetzt werden kann. Eine Anhängevorrichtung mit einem derartigen Kugelträger benötigt jedoch zusätzlich zu den in der Gebrauchsmusterschrift gezeichneten Teilen noch verschiedene zustätzliche Teile, insbesondere mindestens einen bewegbar im Kugelträger gehaltenen, durch die Zahnstange quer zu dieser verstellbaren Kupplungsriegel zum lösbaren Befestigen des Kugelträgers an einem dauernd am Kraftfahrzeug befestigten Halter. Ferner benötigt eine solche Anhängevorrichtung nebst der in der Gebrauchsmusterschrift offenbarten Feder noch mindestens eine zusätzliche Feder. Eine Anhängevorrichtung mit einer gemäss der DE 94 08 478 ausgebildeten Drehverrigelung hat also eine Zahnstange und viele Teile, wobei bereits die Herstellung der Drehverriegelung allein aufwendig und teuer ist. Dies ist unter anderem deshalb der Fall, weil der zusammen mit dem Handgriff aus einem einstückigen Korper bestehenden Drehbolzen beispielsweise mit zylindrischen Lagerflächen, einer Verzahnung sowie der schon erwähnten Ringnut versehen muss, so dass seine Herstellung wahrscheinlich zahlreiche spanabhebende Bearbeitungsschritte erfordert. Eine Anhängevorrichtung mit einer gemäss der DE 94 08 478 U ausgebildeten Drehverriegelung ist also kompliziert und teuer.

Der vorliegenden Erfindung liegt nun die Aufgabe zu Grunde, eine Anhängevorrichtung zur Verfugung zu stellen, die ermöglicht, Nachteile der bekannten Anhängevorrichtungen zu vermeiden und insbesondere betriebssicher, dauerhaft sowie kostengünstig in der Herstellung ist und Sicherungsmittel besitzt, die leicht und ohne Verletzungsgefahr zu handhaben sind.

Diese Aufgabe wird gelost durch eine Anhängevorrichtung mit den im Anspruch 1 aufgeführten Merkmalen.

Die Erfindung betrifft ferner ein Verfahren zur Herstellung einer Anhängevorrichtung, wobei das Verfahren die Merkmale des Anspruchs 11 aufweist.

Vorteilhafte Ausgestaltungen der Anhängevorrichtung sowie des Verfahrens gehen aus den abhängigen Ansprüchen hervor.

Das gemäss der Erfindung verstellbar im Bolzen gehaltene und beim Trennen des Bolzens vom Schaft im Bolzen verbleibende Sicherungselement ermöglicht, die Anhängevorrichtung sehr einfach und mit wenig Aufwand zu fertigen. Zu ihrer Herstellung sind insbesondere nur wenige der aufwendigen und teuren spanabhebenden Bearbeitungsschritte notwendig. Der Bolzen durchdringt im Befestigungszustand vorzugsweise ein im Schaft der Kugelstange vorhandenes Loch sowie mindestens ein mit diesem Loch fluchtendes Loch des Halters und beispielsweise zwei auf gegenüberstehenden Seiten des Schafts angeordnete Löcher des Halters. Die Sicherungsmittel können dann montiert werden, ohne dass im Halter oder in der Kugelstange zusätzlich zu den für den Bolzen vorhandenen Löchern noch ein sonstiges Loch oder Schlitz oder dergleichen erzeugt werden muss und ohne dass noch irgend ein beweglicher und/oder federnder Teil der Sicherungsmittel am Halter montiert werden muss. Ferner muss auch kein Teil der Sicherungsmittel an der Kugelstange angebracht werden. Die Sicherungsmittel können ferner derart ausgebildet und angeordnet werden, dass sie praktisch keine räumlich exponierten beweglichen Teile aufweisen, was sich positiv auf ihre Schmutz- und Witterungsbeständigkeit, die Betriebssicherheit und ihre Lebensdauer auswirkt. Durch die Einfachheit und Anordnung der Sicherungsmittel ist auch keine Verletzungsgefahr bei der Montage vorhanden.

Die Anhängevorrichtung weist vorzugsweise im und/oder am Bolzen gehaltene, manuell betätigbare Stellmittel auf, um das Sicherungselement vom Freigabezustand in den Sicherungszustand zu verstellen und in diesem zu halten. Die Stellmittel können zum Beispiel ein mindestens zum grössten Teil innerhalb des Bolzens angeordnete Stellvorrichtung mit einem Schloss und einem stiftförmigen, parallel zur Bolzenachse verschiebbaren Stellglied aufweisen. Die Stellmittel können dann ferner einen vorübergehend in das Schloss steckbaren Schlüssel aufweisen. Das Schloss kann als Sicherheitsschloss ausgebildet sein und eine als Massenprodukt auf dem Markt sehr günstig erhältliche Einheit mit einer zylindrischen, häufig als Schlosszylinder bezeichneten Hülse und beweglich in dieser gehaltenen Sperrteilen sowie Federn aufweisen. Das Schloss ermöglicht, sowohl das Sicherungselement zu verstellen als auch die Sicherungsmittel gegen Betätigung durch Unbefugte und die wegnehmbaren Teile der Anhängevorrichtung im Sicherungszustand gegen Diebstahl zu sichern, ohne zusätzliche, separate Teile, wie ein Vorhängeschloss vorzusehen. Das Schloss trägt damit noch weiter zur Einfachheit, Preisgünstigkeit und Benutzungsfreundlichkeit der erfindungsgemässen Anhängevorrichtung bei.

Im Folgenden wird der Erfindungsgegenstand anhand von in den Zeichnungen dargestellten Ausführungsbeispielen näher erläutert. In den Zeichnungen zeigt:
die Figur 1 eine Explosionsdarstellung der erfindungsgemässen Anhängevorrichtung,
die Figur 2 eine Stirnansicht des mit einem Griff versehenen Bolzens,
die Figur 3 eine Seitenansicht des im Allgemeinen zylindrischen, metallischen Bolzenteils,
die Figur 4 einen Schnitt durch den im Allgemeinen Bolzenteil entlang der Linie IV-IV der Figur 3,
die Figur 5 einen Schnitt durch den Bolzen entlang der Linie V-V der Figur 2,
die Figur 6 einen Schnitt durch den Bolzen entlang der Linie VI-VI der Figur 2,
die Figur 7 einen Schnitt durch die Anhängevorrichtung entlang der Linie VII-VII der Figur 1, wobei sich die Sicherungsmittel im Freigabezustand befinden und der am Griff des Bolzens gehaltene Deckel weggelassen wurde,
die Figur 8 einen zur Figur 7 analogen Schnitt, aber mit sich im Sicherungszustand befindenden Sicherungsmitteln,
die Figur 9 einen Schnitt durch den Schaft der Kugelstange und den Bolzen entlang der Linie IX-IX der Figur 8,
die Figuren 10 eine Ansicht der Stellvorrichtung im Freigabezustand in der in der Figur 7 durch den Pfeil X bezeichneten Blickrichtung,
die Figur 11 eine Ansicht der Stellvorrichtung im Sicherungszustand in der in der Figur 8 mit XI bezeichneten Blickrichtung,
die Figur 12 einen zur Figur 8 analogen Schnitt durch eine andere Anhangevorrichtung,
die Figur 13 eine Ansicht des Schlussels für die Anhängevorrichtung gemass der Figur 12,
die Figur 14 eine Schrägansicht des Bolzens der Anhängevorrichtung gemäss der Figur 12,
die Figur 15 eine Ansicht des Endstücks des Bolzens mit Blickrichtung auf die Rückseite des Griffs,
die Figur 16 einen zur Figur 4 analogen Schnitt entlang der Bolzenachse den durch im Allgemeinen zylindrischen Bolzenteil und
die Figur 17 einen Schnitt durch das Endstück des Bolzens entlang der Bolzenachse.

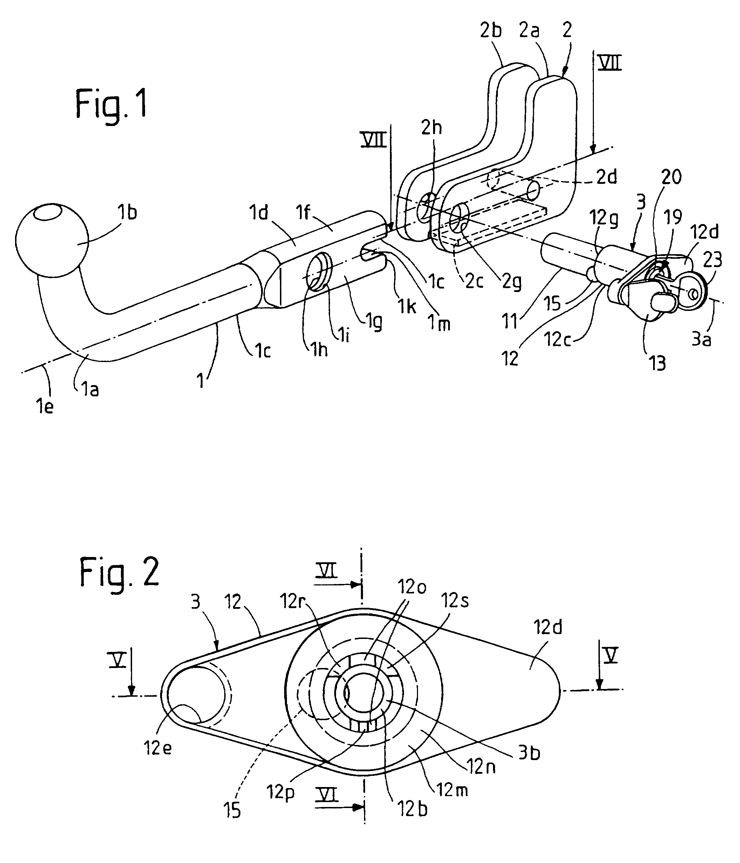

Die in der Figur 1 ersichtliche Anhängevorrichtung besitzt eine Kugelstange 1, einen am Heck eines Kraftfahrzeugs anzubringenden Halter 2 und einen Bolzen 3.

Die Kugelstange 1 ist vorzugsweise metallisch und beispielsweise aus Stahl gefertigt. Sie besitzt einen abgebogenen und/oder abgwinkelten Abschnitt 1a, an dessen oberes Ende die oben abgeflachte Kugel 1b anschliesst. Der Abschnitt 1a hat ein volles, kreisförmiges Profil und eine in einer vertikalen Biegung-Ebene gebogene Achse. Die Kugelstange weist ferner einen im gezeichneten Ausführungsbeispiel geraden sowie ungefähr horizontalen Schaft 1d mit einer Schaftachse 1e auf. Der Schaft 1d hat einen an das der Kugel abgewandte, untere Ende des gebogenen Abschnittes 1b anschliessenden, zylindrischen Abschnitt 1c mit dem gleichen Durchmesser wie der gebogene Abschnitt 1a und einen Abschnitt 1f mit zwei zueinander und zur Biegungs-Ebene des gebogenen Abschnittes 1a parallelen, ebenen Seitenflachen 1g. Der Abschnitt 1f hat senkrecht zu den ebenen Seitenflächen 1g eine kleinere Querschnittbemessung und parallel zu diesen eine grossere Querschnittsabmessung als der zylindrische Abschnitt 1c und wird bei der Herstellung der Kugelstange zum Beispiel durch Pressen und plastisches Verformen von einem Abschnitt einer ursprünglich zylindrischen, einstückigen auch die Abschnitte 1a und 1c bildenden Stange gebildet, wobei zum Beispiel auch die Kugel 1b zusammen mit dem restlichen Teil der Kugelstange aus einem einstückigen Körper besteht. Senkrecht zu Seitenflächen 1g und zur Schaftachse verläuft ein den Schaft durchdringendes, in die beiden Seitenflächen 1g mündendes Loch 1h. Das Loch 1h ist im Wesentlichen zylindrisch, besitzt aber bei der einen Seitenfläche 1g noch eine Erweiterung 1i. Am stirnseitigen, der Kugel abgewandten freien Ende 1k des Schafts 1d und der ganzen Kugelstange 1 ist auch noch ein diese parallel zum Loch 1h durchquerender Einschnitt 1m von der Endfläche der Kugelstange her eingeschnitten. Die Kugelstange besitzt ausser dem Loch 1h und dem Einschnitt 1m keine anderen Löcher, Schlitze, Ausnehmungen oder dergleichen.

Der Halter 2 besteht aus einem metallischen Material, beispielsweise aus Stahl, besitzt zwei ebene, zueinander parallele, plattenförmige Halterabschnitte 2a, 2b bzw. Platten und ist bei der Verwendung der Anhängevorrichtung dauernd am Fahrgestell eines Kraftfahrzeuges befestigt, beispielsweise angeschweisst oder angeschraubt. Zwischen den plattenförmigen Halterabschnitten 2a, 2b befindet sich in der Nähe von deren unteren Rändern eine mit den Halterabschnitten 2a, 2b verschweisste Stützplatte 2c. Ein als Halteorgan 2d dienender, kurzer, im Wesentlichen zylindrischer Stab hat zwei geriffelte, in Löcher der plattenformigen Halterabschnitte 2a, 2b eingepresste Endabschnitte und zwischen den plattenförmigen Halterabschnitten 2a, 2b eine glatte, zylindrische Mantelfläche. Die Stutzplatte 2c und das Halteorgan 2d verbinden die beiden Halterabschnitte 2a, 2b starr miteinander und halten diese in Abstand voneinander. Die beiden plattenförmigen Halterabschnitte 2a, 2b weisen zudem je ein Loch 2g bzw. 2h auf. Die Locher 2g, 2h sind als miteinander fluchtende zylindrische Bohrungen ausgebildet.

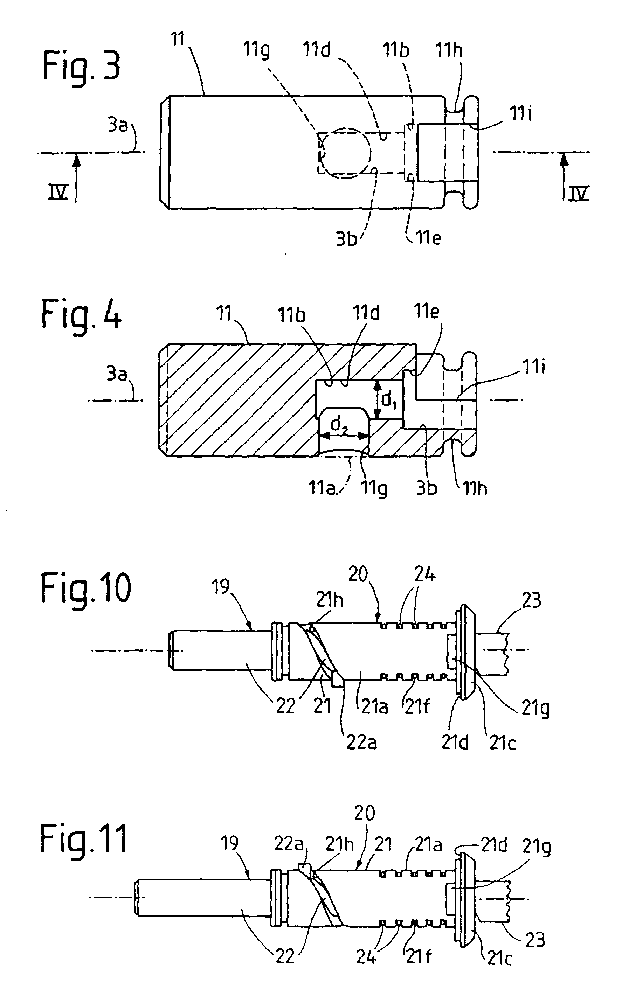

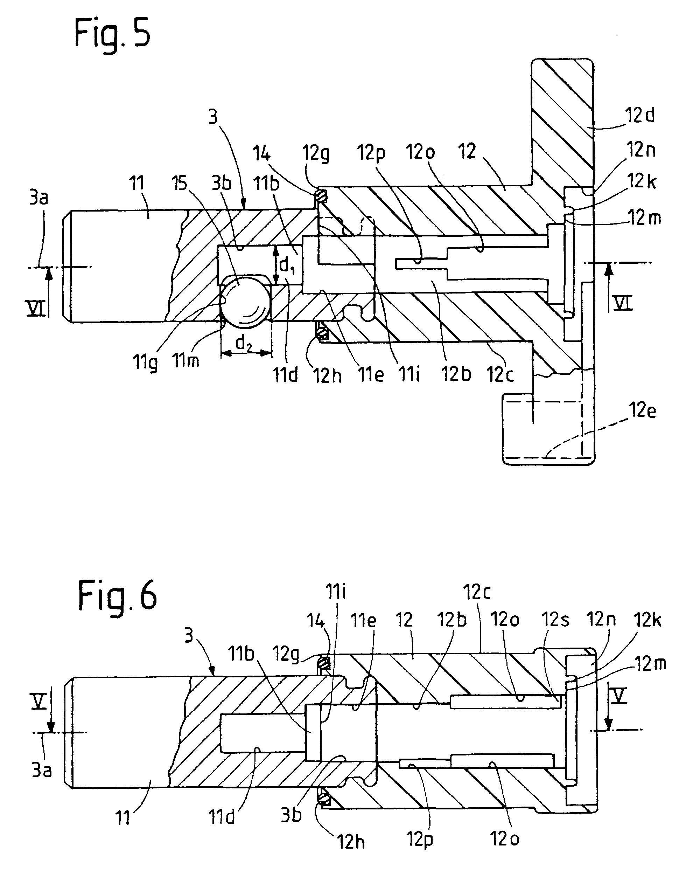

Der auch in den Figuren 2 und 5 bis 8 ersichtliche Bolzen 3 ist aus einem im Allgemeinen zylindrischen, metallischen, separat in den Figuren 3 und 4 dargestellten Bolzenteil 11 und einem starr sowie unlösbar mit dem Bolzenteil 11 verbundenen Endstück 12 zusammengesetzt. Der Bolzen 3 besitzt eine Bolzenachse 3a. Der im Allgemeinen zylindrische Bolzenteil 11 definiert eine zylindrische Hüllfläche 11a. Das Endstück 12 ist beim einen Ende des Bolzenteils 11 angeordnet und ragt mindestens stellenweise sowie zum Beispiel um den ganzen Umfang des Bolzenteils 11 herum in radialer Richtung über dessen zylindrische Hüllfläche 11a hinaus. Der im Allgemeinen zylindrische Bolzenteil 11 besteht aus einem eine hohne Festigkeit, insbesondere Zugfestigkeit, aufweisenden sowie auch ziemlich harten, metallischen Material, beispielsweise einem hoch-legierten Stahl, wie etwa Automaten-Drehstahl mit einem gegen Korrosion schützenden Zinküberzug oder eventuell blankem, rostfreiem Stahl. Das Endstück 12 besteht aus einem anderen Material, das gut giessbar ist, aber dafur eine kleinere Festigkeit und eine kleinere Härte aufweisen kann. Das Endstück 12 besteht zum Beispiel aus einem spritzgiessbaren, thermoplastischen Kunststoff.

Der Bolzen 3 hat ein parallel und nämlich koaxial zur Bolzenachse 3a verlaufendes erstes Loch 3b. Dieses besteht aus einem Sackloch und ist aus einem im Bolzenteil 11 verlaufenden Loch 11b bzw. Lochteil und einem im Endstück 12 verlaufenden Loch 12b bzw. Lochteil gebildet. Das Loch 11b besitzt einen im Innern des metallischen Bolzenteils 11 endenden Abschnitt 11d mit einem Durchmesser *d*_{*1*} sowie einen zum Endstück 12 hin offenen Abschnitt 11e, dessen Durchmesser grösser ist als *d*_{*1*}.

Der Bolzen 3 hat ein zweites Loch 11g, das quer zum ersten Loches 3b und radial zur Bolzenachse 3a verläuft vollständig im Boilzenteil 11 angeordnet sowie als radiales Sackloch ausgebildet ist und einerseits in den Abschnitt 11d des ersten Lochs 3b sowie andererseits in die zylindrische Umfangsfläche des metallischen Bolzenteils 11 mündet. Der Durchmesser *d*_{*2*} des zweiten Lochs 11g ist dabei grösser als der Durchmesser *d*_{*1*}. Der metallische Bolzenteil 11 besitzt bei seinem mit dem Endstück 12 verbundenen Endabschnitt eine Ringnut 11h und eine Ausnehmung 11i.

Das Endstück 12 weist einen hohlen, im Wesentlichen hohlzylindrischen Hals 12c sowie an dessen dem metallischen Bolzenteil 11 abgewandten Ende einen Griff 12d mit mindestens zwei radial über den Hals vorstehenden Griff-Vorsprüngen auf. Der eine der Griff-Vorsprünge besitzt noch eine Verdickung mit mindestens einem zur Bolzenachse 3a parallelen Loch 12e, das zur Befestigung eines in der Figur 1 ersichtlichen Deckels 13 dient. Dieser besteht aus einem einstückigen Körper aus thermoplastischem Kunststoff und hat einen im Loch 12d eingerasteten Verankerungsteil und einen schwenkbar mit diesem verbundenen, auf- und zuklappbaren Deckteil. Der vom Loch 12b des Endstücks 12 gebildete Teil des ersten Lochs 3b besitzt zwei einander bezüglich der Bolzenachse 3a diametral gegenüberliegende, parallel zur Bolzenachse 3a verlaufende Drehsicherungsnuten, die sich mindestens annähernd bis zu dem sich beim Griff befindenden, offenen Ende des Loches 3b erstrecken. An das sich naher beim metallischen Bolzenteil 11 befindende Ende von einer der Drehsicherungsnuten 12o schliesst eine schmalere Führungsnut 12p an, die ebenfalls parallel zur Bolzenachse verläuft.

Der Aussendurchmesser des Halses 12c des Endstücks ist grösser als der Durchmesser der zylindrischen Hüllflache 11a des mit dem Endstück 12 verbundenen, metallischen Bolzenteils 11, der einen zylindrischen Abschnitt des Bolzens bildet. Der Hals 12c bildet daher eine Schulter 12g mit einer vom metallischen Bolzenteil nach aussen ragenden Schulterfläche. Diese besitzt eine Ringnut 12h, in der ein gummielastischer Ring 14, nämlich ein O-Ring, gehalten ist. Die Schulter 12g und der Ring 14 bilden zusammen einen Halter-Anschlag 12g, 14 des Bolzens 3.

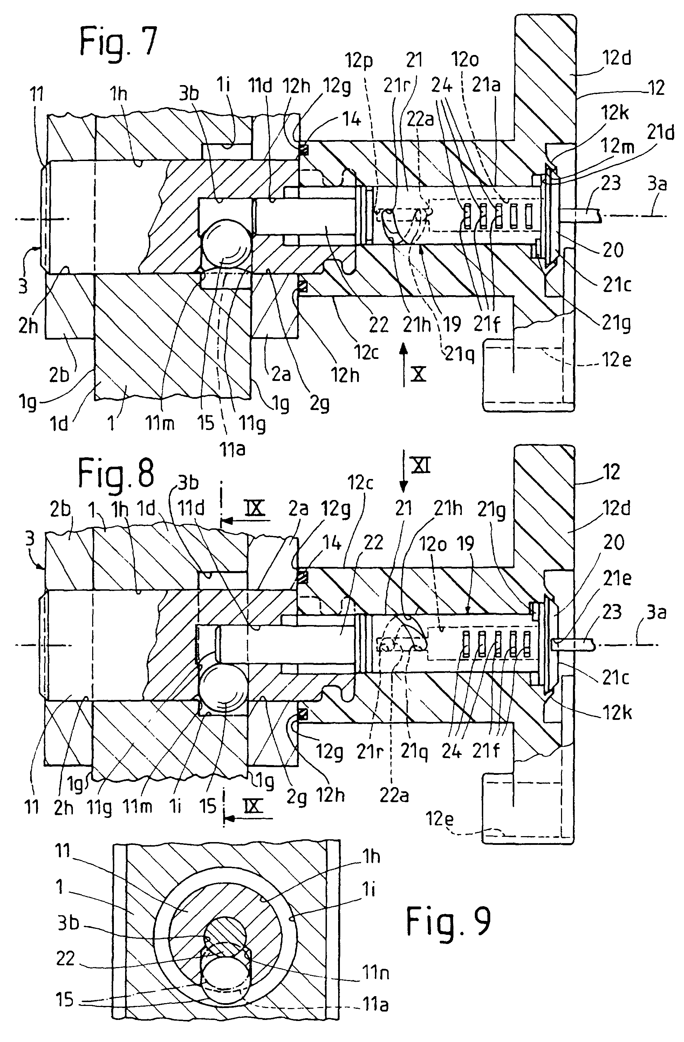

Im zweiten Loch 11g des Bolzens befindet sich eine als Sicherungselement 15 dienende Kugel mit einem Kugeldurchmesser, der grösser ist als der Durchmesser *d*_{*1*} und den Durchmesser *d*_{*2*} höchstens wenig unterschreitet. Eine auf der Aussenseite des Lochs 11g ausgebildete und in dieses hineinragende Nase dient als Anschlag 11m für die Kugel und verhindert, dass sie aus dem Loch 11g und dem Bolzen 3 herausfällt. Die Nase ist beispielsweise in einfacher Weise nach dem Einbringen der Kugel in das Loch 11g durch plastisches Verformen, zum Beispiel durch Prägen, gefertigt worden. Da das zweite Loch 11g als Sackloch ausgebildet ist und einen grosseren Durchmesser aufweist als der Abschnitt 11d des ersten Loches, in den es mündet, bildet das Material des metallischen Bolzenteils 11 bei der Verbindung der beiden Löcher 11b, 11g, d.h. bei der inneren Mundung des zweiten Lochs 11g einen besonders deutlich in der Figur 9 ersichtlichen inneren Anschlag 11n für das aus der Kugel bestehende Sicherungselement 15. Infolge dieses inneren Anschlages 11n kann die Kugel 15 auch nicht im ersten Loch die nachstehend beschriebenen Stellmittel blockieren oder in Richtung der Bolzenachse 3a weggleiten oder wegrollen.

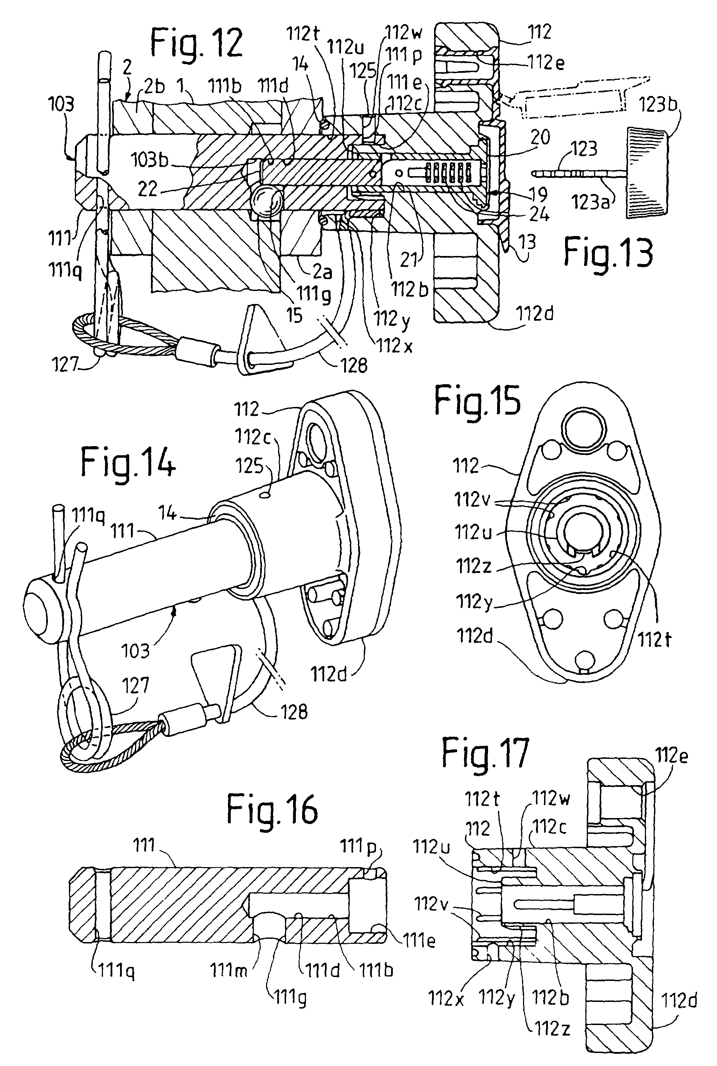

Zum Verstellen des Sicherungselementes 15 dienende Stellmittel besitzen eine im ersten Loch des Bolzens 3 gehaltene, als Ganzes mit 19 bezeichnete Stellvorrichtung. Aufbau und Funktionsweise der Stellvorrichtung 19 werden besonders deutlich sichtbar aus den Figuren 10 und 11, in denen die Stellvorrichtung separat dargestellt ist. Die Stellvorrichtung 19 besitzt ein Schloss 20 mit einer Hülse 21 sowie einen in der Hülse 21 und/oder im ersten Loch 3b des Bolzens 3 axial verschiebbar und drehbar geführten und als Stellglied dienenden Stift 22. Das Schloss 20 besteht aus einem anschliessend näher beschriebenen Sicherheitsschloss mit einem aus der Hülse 21 gebildeten Schlosszylinder. Dabei ist das bei einem Sicherheitsschloss üblicherweise noch vorhandene Gehäuse weggelassen und funktionsmässig durch das die Drehsicherungsnuten 12o aufweisende Endstück 12 ersetzt. Die Hülse weist eine mit der Bolzenachse 3a zusammenfallende Hülsenachse und eine im Wesentlichen zylindrische Oberfläche 21a auf und ist mit höchstens kleinem, radialem Spiel drehbar und axial unverschiebbar in dem zum ersten Loch 3b des Bolzens 3 gehörenden Loch 12b des Endstücks 12 gehalten. Weiter besitzt die Hülse an der Stirnseite des Schlosses eine scheibenförmige Stirnwand 21c, die von der Hülsenachse weg über die zylindrische Oberfläche 21a hinausragt. Die Stirnwand 21c liegt mit einer ebenen, radialen, ringförmigen Auflagefläche 21d an einer ebenen, radialen, ringförmigen Auflagefläche 12m des Endstücks 12 an, die durch eine abgestufte, ringförmige Erweiterung 12n des ersten Loches 3b gebildet ist. Ein ringförmiger Wulst 12k des Endstücks 12 übergreift den Rand der Stirnwand 21c der Hülse 21, sichert diese gegen axiale Verschiebungen und hält die ganze Stellvorrichtung 19 im Bolzen 3. Der ringförmige Wulst 12k ist bei der Herstellung nach dem Einsetzen der Stellvorrichtung 19 durch plastisches Verformen, wie zum Beispiel durch Stauchen, nach innen gedruckt worden. Die Erweiterung 12n ist übrigens so ausgestaltet, dass sie einen Ansatz des schwenkbaren Deckteils des Deckels 13 aufnehmen und diesen Deckteil derart losbar halten kann, dass dieser die Mündung des ersten Loches 3b abschliesst. Der Deckel 13 schützt dann das Schloss 20 gegen Verschmutzungen und Beschädigungen. Beim Drehen der Hülse 21 sorgen nockenförmige, als Anschläge dienende Ansätze 21g bzw. 12r, 12s an der Hülse 21 respektive am Endstück 12 dafür, dass der maximale Drehwinkel der Hülse auf höchstens ungefähr 180° und zum Beispiel auf genau 180° oder etwas weniger als 180° beschränkt wird. In der Stirnwand 21c ist ferner ein Schüssel-Schlitz 21e vorhanden. Ein zu den Stellmitteln gehörender Schlüssel 23 hat einen länglichen, Zacken und Kerben aufweisenden, durch den Schlüssel-Schlitz 21e hindurch in die Hülse 21 steckbaren Steckteil und einen Griff, der zum Beispiel scheibenförmig ist, gleich wie der Steckteil aus metallischem Material besteht und mit dem Steckteil zusammen in eineer gemeinsamen Ebene liegt. Im Innern der Hülse sind plättchen- oder stiftförmige, radial verstellbare Sperrteile 24 und an diesen angreifende Federn angeordnet. Die Sperrteile 24 ragen, wenn kein Schlüssel eingesteckt ist, auf mindestens einer Seite durch Schlitze 21f der Hülse über die zylindrische Oberfläche 21a hinaus und in mindestens eine der Drehsicherungsnuten hinein. Durch Einstecken des passenden Schlüssels werden sie jedoch entgegen der Kraft der an ihnen angreifenden Federn derart verschoben, dass sich jeder Sperrteil 24 vollständig innerhalb der durch die zylindrische Oberfläche 21a definierten Zylinderfläche befindet. Weiter weist die Hülse einen wendelförmigen Schlitz 21h auf. Diesen durchdringt ein Nocken 22a, am Stellglied 22 angebracht ist und von der Hülsenachse radial nach aussen und in die axiale Nut 12p hinein ragt.

Bei der Herstellung einer Anhängevorrichtung und deren Bolzen 3 wird der im Allgemeinen zylindrische, metallische Bolzenteil 11 zum Beispiel von einer längeren Stange aus Automaten-Drehstahl abgetrennt und durch spanabhebende Arbeitsschritte, d.h. durch Bohren, Drehen und Fräsen mit den Löchern 11b, 11g, der Ringnut 11h, einer an den dem Endstück abgewandten Ende vorhandenen Fase und der Ausnehmung 11i versehen. Der zylindrisch bleibende Teil der Umfangsfläche des Bolzens braucht dagegen keiner spanabhebenden Bearbeitung unterzogen zu werden. Nach der spanabhebenden Formgebung des Bolzenteils 11 wird dieser zum Beispiel noch elektrolytisch mit einem Zinküberzug versehen. Dieser ist sehr dünn, beispielsweise höchstens einige Mikrometer dick, und so gleichmässig sowie glatt, dass der mit dem Zinküberzug versehene Bolzen mit einem kleinen vorgegebenen Spiel in die Löcher 1h, 2g, 2h der Kugelstange 1 und des Halters 2 hinein passt.

Das aus Kunststoff bestehende Endstück 12 wird durch Giessen, beispielsweise Spritzgiessen, ohne spanabhebende Nachbearbeitung gefertigt. Der Kunststoffteil 12 wird beim Giessen an den die Ringnut 11h und die Ausnehmung 11i aufweisenden Endabschnitt des metallischen Bolzenteils 11 angegossen, hat in die Ringnut und in die Ausnehmung 11i eingreifende Abschnitte und ist nach der Fertigstellung formschlüssig, starr sowie unlösbar mit dem metallischen Bolzenteil 11 verbunden. Die Ringnut 11h und der in diese eingreifende Abschnitt des Kunststoffteiles verhindern dabei insbesondere axiale Bewegungen des metallischen Bolzenteiles 11 relativ zum Kunststoffteil 12. Analog verhindert die Ausnehmung 11i zusammen mit dem in sie eingreifenden Abschnitt des Kunststoffteils 12 Verdrehungen der beiden Teile 11, 12 gegeneinander.

Im Folgenden wird beschrieben, wie die Kugelstange 1 mit dem Bolzen 3 am Halter 2 befestigt werden und gegen eine Trennung von diesem gesichert werden kann. Dazu müssen die aus dem Sicherungselement 15, also der Kugel, und den Stellmitteln gebildeten Sicherungsmittel im Freigabezustand sein.

Hierzu sei angemerkt, dass das Schloss zum Beispiel derart ausgebildet sein kann, dass der Schlüssel nur im Sicherungszustand aus dem Schloss herausgezogen und in dieses hineingesteckt werden kann. Bei einer solchen Ausbildung des Schlosses muss der Schlüssel im Schloss stecken, damit sich die Sicherungsmittel im Freigabezustand befinden können. Ferner muss sich die Hülse 21 in derjenigen ihrer beiden End-Drehstellungen befinden, die ihre in den Figuren 7 und 10 dargestellte Freigabe-Drehstellung bildet. Das Stellglied 22 befindet sich dann in der in den Figuren 7 und 10 gezeichneten Freigabe-Stellung. In dieser ist das Stellglied 22 so weit wie möglich vom Grund des ersten Loches 3b entfernt und in die Hülse 21 eingeführt und der Nocken 22a befindet sich in der Nähe des der Stirnwand 21c zugewandten Endes 21q des wendelförmigen Schlitzes 21h der Hülse 21. Wenn sich das Stellglied in Freigabe-Stellung befindet, kann das Sicherungselement 15 sich in einer Position befinden oder in eine Position gebracht werden, in der es sich vollständig innerhalb der zylindrischen Hüllfläche 11a befindet.

Wenn sich die Sicherungsmittel im Freigabezustand befinden, wird als Erstes die Kugelstange 1 in der in der Figur 1 angedeuteten Lage so in den Halter 2 hineingeschoben, dass der Einschnitt 1m über das Halteorgan 2d geschoben wird und die Stützplatte 2c den Schaft der Kugelstange 1 lose berührt und eventuell stützt. Anschliessend wird der Bolzen 3 in die miteinander fluchtenden Löcher 2g, 2h, 1h hineingeschoben, bis er mit dem von der Schulter 12g und dem gummielastischen Ring 14 gebildeten Halter-Anschlag 12a, 14 an der ebenen Aussenfläche von einem der plattenförmigen Halterabschnitte 2a, 2b, beispielsweise gemäss der Figur 7 am Halterabschnitt 2a, ansteht, wobei der gummielastische Ring 14 leicht zusammengedruckt wird. Falls das aus einer Kugel bestehende Sicherungselement 15 vor dem Einsetzen des Bolzens 3 noch aus dem zweiten Loch 11g des Bolzens herausragen sollte, wird das Sicherungselement beim Einsetzen des Bolzens 3 in die Löcher 1h und 1g durch den Halterabschnitt 2a nach innen in das zweite Loch 11g hinein verschoben.

Anschliessend können die Sicherungsmittel in den Sicherungszustand gebracht werden. Dazu wird die Hülse 21 mit dem Schlüssel 23 gedreht, und zwar bei Blickrichtung von aussen auf die Stirnwand der Hülse im Gegenuhrzeigersinn. Die Hülse 21 gelangt dabei in die in den Figuren 8 und 11 ersichtliche End-Drehstellung, welche die Sicherungs-Drehstellung bildet. Der Nocken 22a des Stellglieds 22 befindet sich dann in der Nähe des Endes 21r des wendelförmigen Schlitzes 21h. Beim Drehen der Hülse 21 wird der Nocken 22a von der Nut 12p geführt, so dass das Stellglied 22 sich nicht mit der Hülse mitdreht. Aufgrund des wendelförmigen Schlitzes 21h wird daher beim Drehen der Hülse 21 das Stellglied 22 axial aus der Hülse hinaus näher zum Grund des ersten Lochs 3b verschoben. Das Stellglied ragt dann in dem in der Figur 8 gezeichneten Schnitt mindestens bis zum Bereich der inneren Mündung des zweiten Lochs 11g gegen den Grund des ersten Lochs 3f hin und beispielsweise ungefähr oder mindestens bis zur Achse des zweiten Lochs 11g. Bei dieser Verschiebung des Stellgliedes 22 wird die Kugel vom Stellglied 22 durch das zweite Loch 11g nach aussen geschoben, so dass ein Teil von ihr aus dem Bolzen 3 herausragt, das heisst über die zylindrische Hüllfläche 11a vorsteht. Dabei gelangt der derart vorstehende Teil der Kugel in die Erweiterung 1i des Loches 1h in der Kugelstange 1. Die Schlitze 21f für die Sperrteile 24 befinden sich dann in einer Stellung, in der die Sperrteile durch die an ihnen angreifenden Federn in eine oder beide der Drehsicherungsnuten eingeführt werden können, indem der Schlüssel 23 vom Schloss 20 getrennt wird. Wenn die Sperrteile in mindestens eine der Drehsicherungsnuten eingreifen, sichern sie die Hülse 21 gegen Drehungen und das Sicherungselement gegen ein Zurückverschieben in das Innere des Bolzens 3. Das Stellglied hält das durch die Kugel gebildete Sicherungselement 15 in dessen genannter Stellung fest. Das Sicherungselement hintergreift dann den Halterabschnitt 2a und übergreift also die dem Halter-Anschlag abgewandte, mit der Bolzenachse 3a einen rechten Winkel bildende Innenfläche des Halterabschnitts 2a, so dass der Bolzen 3 mit dem Halter 2 verriegelt wird und nicht mehr aus diesem herausgezogen werden kann.

Die Anhängevorrichtung und der Bolzen befinden sich dann im Befestigungszustand, in dem der Bolzen mindestens einen Abschnitt des Halters 2, nämlich zwei durch die beiden plattenförmigen Halterabschnitte 2a, 2b sowie den Schaft 1d der Kugelstange quer zur Schaftachse 1e durchdringt. Mindestens derjenige Teil der Mantelfläche des Bolzenteils 11, der sich im Zwischenraum zwischen den beiden Halterabschnitten 2a und 2b befindet, ist - abgesehen von dem in ihn mündenden, zweiten Loch 11g des Bolzens 3-vollständig zylindrisch sowie glatt und besitzt insbesondere im Gegensatz zu dem aus der zitierten DE 94 08 478 bekannten Drehbolzen keine Verzahnung. Der zwischen die beiden Halterabschnitte 2a, 2b hineinragende Schaft 1d wird dann durch diese Halterabschnitte, das Halteorgan 2d und den Bolzen 3 mindestens annähernd unbeweglich in einer definierten Lage am Halter gehalten. Ferner sichern die sich im Sicherungszustand befindenden Sicherungsmittel den Bolzen in der vorgängig beschriebenen Weise gegen eine Trennung vom Halter und vom Schaft der Kugelstange. Der Schlüssel 23 wird nach dem Einstellen des Sicherungszustandes für die Verwendung der Kugelstange dann aus dem Schloss herausgezogen. Der gummielastische Ring 14 dämpft bei der Verwendung der Anhängevorrichtung zum Ziehen eines Anhangers zur Bolzenachse 3a parallele Bewegungen, insbesondere Vibrationen des Bolzens 3.

Falls die am Halter befestigte Kugelstange 1 wieder vom Halter getrennt werden soll, kann eine Person den Schlüssel 23 in das Schloss 20 stecken und die Hülse 21 - in Blickrichtung auf deren Stirnwand - im Uhrzeigersinn drehen, so dass die Hülse in die in den Figuren 7 und 10 ersichtliche Freigabe-Drehstellung gelangt. Der Nocken 22a des Stellglieds gelangt dabei in die Nähe des Endes 21q des wendelförmigen Schlitzes 21h. Das Stellglied 22 gelangt in die Freigabe-Stellung. Das Sicherungselement 15 ist danach im zweiten Loch 11g zwischen den beiden Anschlägen 11m und 11n frei beweglich. Der Bolzen 3 kann nun aus dem Schaft 1d und dem Halter herausgezogen werden. Das Sicherungselement 15 wird dabei durch den Halterabschnitt 2a von selbst so tief in das zweite Loch 11g des Bolzens hinein geschoben, dass der Bolzen eben heraus gezogen werden kann.

Die Figuren 12 bis 17 zeigen Teile einer Variante der Anhängevorrichtung. Die Kugelstange und der Halter sind zum Beispiel im Wesentlichen gleich oder ähnlich ausgebildet wie bei der anhand der Figuren 1 bis 11 beschriebenen Anhängevorrichtung und wiederum mit den Bezugsnummern 1 bzw. 2 bezeichnet. Der Halter hat insbesondere zwei in der Figur 12 ersichtliche plattenförmige Halterabschnitte 2a, 2b.

Dagegen ist der Bolzen der zum Teil in den Figuren 12 bis 17 dargestellten Anhängevorrichtung etwas anders ausgebildet als bei der Vorrichtung gemäss den Figuren 1 bis 11 und mit 103 bezeichnet. Der Bolzen 103 ist aus zwei ursprünglich separaten Teilen, nämlich einem im Allgemeinen zylindrischen, metallischen Bolzenteil 111 und einem Endstück 112 zusammengesetzt. Der Bolzenteil 111 besteht wiederum aus einem hoch-legierten Stahl, namlich verzinktem Automaten-Drehstahl. Dagegen besteht das Endstuck 112 im Gegensatz zum Endstück 12 nicht aus Kunststoff, sondern aus einer Druckgusslegierung, die als Hauptkomponente Zink und ferner Aluminium sowie zum Beispiel noch kleine Anteile anderer Metalle enthält. Der Bolzen 103 weist wiederum ein erstes, zur Bolzenachse koaxiales Loch 103b auf, das aus einem abgestuften Sackloch besteht und zum Teil durch ein Loch 111b des Bolzenteils 111 und zum Teil durch ein Loch 112b des Endstücks 112 gebildet ist. Der Bolzen 103 hat zudem wiederum ein zweites, zur Bolzenachse radiales Loch, das ausschliesslich durch ein zweites Loch 111g des Bolzenteils 111 gebildet ist. Das axiale Loch 111b hat einen dessen Grund bildenden, zylindrischen Abschnitt 111d und einen an diesen anschliessenden, ebenfalls zylindrischen, aber weiteren Abschnitt 112e, der in das mit dem Endstück 112 verbundene Ende des Bolzenteils 111 mündet. Der Bolzenteil 111 hat noch ein radiales, in den weiteren Lochabschnitt 111e mündendes Loch 111p und in der Nähe seines dem Endstück 112 abgewandten Ende ein ihn durchdringendes, diametrales Loch 111q. Der Bolzenteil 111 hat ferner - gleich wie der Bolzenteil 11 - an seinem dem Endstück abgewandten Ende eine kleine konische oder im Schnitt rundliche Fase. Dagegen hat der Bolzenteil 111 weder eine der Ringnut 11h des Bolzenteils 11 entsprechende Ringnut, noch eine der Ausnehmung 11i entsprechende Ausnehmung.

Das Endstück 112 hat analog wie das Endstück 12 einen hohlen Hals 112c mit einer äusseren zylindrischen Mantelfläche und einen in radialer Richtung mindestens stellenweise über den Hals hinausragenden Griff 112d. Dieser ist mit einem zur Bolzenachse parallelen Loch 112e versehen, das dem Loch 12e des Endstücks 12 entspricht und den Verankerungsteil eines Deckels 13 halt, der in der Figur 12 mit vollen Linien in geschlossenem Zustand und mit strichpunktierten Linien in geöffnetem Zustand gezeichnet ist. Das Loch 112b des Endstucks 112 ist durchgehend und hat bei seiner einen Mündung eine Erweiterung 112t, in die ein Endabschnitt des Bolzenteils 111 hineinragt. Das Endstück 112 hat einen sich in der Erweiterung 112t befindenden, hülsenförmigen Kragen 112n, der in den weiteren Abschnitt 111e des Lochs 111b des Bolzenteils 111 hineinragt. Die im Allgemeinen zylindrische Innenfläche der Erweiterung 112t ist mit einigen um die Bolzenachse herum verteilten, axialen Rippen 112v versehen. Die Innenfläche der Erweiterung 112t, deren Rippen 112v und der Kragen 112n ergeben zusammen mit dem in das Endstück 112 hineinragenden Endabschnitt des Bolzenteils 111 eine Pressverbindung, welche den Bolzenteil 111 starr mit dem Endstück 112 verbindet. Das letztere hat zudem ein radiales Loch 112w, das mit dem radialen Loch 111p des Bolzenteils 111 fluchtet. Ein in die beiden Löcher 111ü, 112 eingepresster Stift 125 ergibt eine zusaätzliche drehfeste Verbindung des Endstücks 112 mit dem Bolzenteil 111.

Der Bolzen 103 hält - wie der Bolzen 3 - ein aus einer Kugel bestehendes Sicherungselement 15 und ist mit Stellmitteln versehen, die gleich oder ähnlich wie diejenigen des Bolzens 3 ausgebildet und wie diese mit 19 bezeichnet sind und ein Schloss 20 mit einer Hülse 21 und Sperrteilen 24 sowie ein Stellglied 22 aufweisen. Der in der Figur 13 mit 123 bezeichnete Schlüssel 123 hat einen Steckteil 123a sowie einen Griff 123b, wobei aber der letztere zum Beispiel einen Kunststoffknopf mit einer geriffelten Umfangsfläche aufweist.

Der Hals 112c des Endstücks 112 hat noch ein radiales Loch 112x, das in eine in der Innenfläche der Erweiterung 112t des Lochs 112b vorhandene axiale Nut 112y mündet. Der Kragen 112a des Endstücks 112 ist auf seiner Aussenseite mit einer der Nut 112y gegenüberstehenden, axialen Nut 112z versehen.

Ein in den Figuren 12 und 14 ersichtlicher, federnder Clip 127 besteht aus einem gebogenen Draht und hat einen ersten sowie einen zweiten Schenkel. Wenn sich die Kugelstange gemäss der Figur 12 im Befestigungszustand befindet und der Bolzen 103 den Halter 2 und den Schaft der Kugelstange 1 durchdringt, kann der Clip 127 an demjednigen Endabschnitt des Bolzenteils 11, der auf der dem Griff 112d abgewandten Seite des Halters 2 aus diesem herausragt, lösbar befestigt werden und den Bolzen zusätzlich zum Sicherungselement 15 gegen ein Herausziehen aus dem Halter 2 sichern. Der erste Schenkel des Clips hat einen geraden freien Endabschnitt und kann beim Befestigen des Clips am Bolzenteil 111 durch das Loch 111q des Bolzenteils 111 hindurch gesteckt werden. Der zweite Schenkel ist derart gebogen, dass er dann einen Umfangsabschnitt des Bolzenteils umgreift und den Clip federnd am Bolzenteil 111 festklemmt. Der federnde Clip kann unter einer vorübergehenden elastischen Deformation rasch in der beschriebenen Weise lösbar am Bolzenteil 111 befestigt und wieder von diesem entfernt werden. Der Clip ist durch ein mindestens teilweise flexibles Verbindungselement 128 unverlierbar mit dem Hals 112c des Endstücks 112 verbunden. Das Verbindungselement 128 besitzt ein Drahtseil, dessen dem Clip abgewandtes Ende durch das Loch 112x hindurch in die Nut 112y des Endstücks 112 hineinragt und durch den Bolzenteil 111 festgeklemmt ist.

Bei der Herstellung des Bolzens 103 werden der im Allgemeinen zylindrische Bolzenteil 111 und das Endstück 112 separat und voneinander getrennt hergestellt. Der Bolzenteil 111 wird dabei analog wie der Bolzenteil 11 durch spanabhebende Arbeitsschritte hergestellt. Das Endstück 112 wird durch ein Druckgussverfahren hergestellt. Die Herstellung des Endstücks erfordert dabei - abgesehen von dem zum teilweisen Aufnehmen des Stift 125 dienenden, eventuell durch Bohren hergestellten Loch 112 w - keine spanabhebende Bearbeitung.

Nach der Herstellung des Bolzenteils 111 und des Endstücks 112 kann der Bolzenteil 111 durch Einpressen in das Endstück 112 und durch Einsetzten des Stifts 125 starr mit dem Endstuck verbunden werden. Beim Einpressen des Bolzenteils 111 wird gleichzeitig auch das Drahtseil des Verbindungselements 128 im hohlen Hals 112c des Endstücks 112 festgeklemmt.

Soweit vorgängig nichts anderes geschrieben wurde, kann die Anhängevorrichtung gemäss den Figuren 12 bis 17 gleich oder ähnlich ausgebildet sein und hergestellt sowie verwendet werden, wie die anhand der Figuren 1 bis 11 beschriebene Anhängevorrichtung. Die beiden Vorrichtungen haben auch weitgehend ähnliche Eigenschaften und Vorteile und können insbesondere beide wirtschaftlich hergestellt werden.

Die Anhängevorrichtung kann noch in mancher Hinsicht abgeändert werden. Es können beispielsweise Merkmale der beiden beschriebenen Ausführungsbeispiele kombiniert werden. Ferner kann der horizontale Schaft beispielsweise auch teilweise geneigt sein. Die Kugelstange kann zum Beispiel mehrfach abgebogen und/oder abgewinkelt sein und - im Befestigungszustand - einen von der Kugel ungefähr vertikal nach unten verlaufenden Abschnitt, einen von diesem weg schräg nach unten geneigten Abschnitt und einen horizontalen, im Halter steckenden Abschnitt aufweisen. Ferner kann die Kugelstange eventuell auch ungefähr U-förmig sein, wobei der an die Kugel anschliessende Abschnitt in allen Fällen ungefähr vertikal von der zur Kugelstange gehörenden Kugel weg nach unten verlaufen soll. Weiter muss das Sicherungselement keine Kugel sein, sondern kann auch beispielsweise aus einem kurzen zylindrischen Stift mit konischen und/oder im Axialschnitt abgerundeten Enden bestehen oder eine andere geeignete Form aufweisen. Der Steckteil des Schlüssels des Sicherheitsschlosses könnte sacklochartige Vertiefungen anstelle von Zacken sowie Kerben aufweisen. Das Schloss könnte eventuell derart ausgebildet werden, dass der Schlüssel auch in der im Freigabezustand eingenommenen Stellung aus dem Schloss herausgezogen werden kann und dass die Sperrteile des Schlosses dann ebenfalls in mindestens eine Drehsicherungsnut hineinragen und die Hülse gegen Drehungen sichern. Anstelle eines mit einem Schlüssel zu betätigenden Schlosses kann die Stellvorrichtung auch einen anderen Mechanismus zum Verschieben des Stellglieds besitzen. Das erste, axiale Loch des Bolzens und das Stellglied könnten zum Beispiel ineinander eingreifende Gewinde aufweisen, so dass das Stellglied durch Drehen parallel zur Bolzenachse im Bolzen hin und her verstellbar ist. Ferner kann der Griff des Endstücks des Bolzens mehr als zwei, zum Beispiel drei, sechs oder eine beliebige Anzahl von Vorsprüngen aufweisen. Bei dem in den Figuren 1 bis 11 gezeichneten Ausführungsbeispiel der Anhängevorrichtung befindet sich die Ausnehmung 11i in zur Bolzenachse 3a paralleler Projektion diametral gegenüber dem zweiten Loch 11g des Bolzens 3. Die Ausnehmung kann selbstverständlich auch auf der gleichen Seite wie das zweite Loch oder bei irgend einer anderen Umfangsstelle angeordnet werden. Ferner könnte man im Bolzenteil 11 zwei oder mehr entlang dem Umfang verteilte Ausnehmungen oder wie beim Bolzenteil 111 gar keine Ausnehmung vorsehen. Ebenso ist es beispielsweise ohne Weiteres möglich, den Bolzen zusammen mit dem Griff aus einem einstückigen Körper zu fertigen und dabei beispielsweise eine andere Griff-Form zu wählen. Das radiale, zweite Loch des Bolzens könnte des Weiteren derart angeordnet werden, dass das in diesem Loch verschiebbare Sicherungselement nicht an der Innenfläche des gleichen Halterabschnitts 2a wie der Halter-Anschlag, sondern an der Aussenflache des anderen Halterabschnitts 2b angreift. Der sich zwischen den beiden plattenförmigen Halterabschnitten 2a, 2b befindende Teil des Bolzens könnte dann eine vollständig zylindrische, glatte Mantelfläche haben. Eventuell könnte das Sicherungselement 15 im Sicherungszustand anstelle von einem Halterabschnitt oder zusätzlich zu einem solchen einen mit der Bolzenachse einen Winkel bildenden Flächenabschnitt des Schafts der Kugelstange hintergreifen. Ferner könnte man die zylindrische Umfangsfläche des Bolzens noch mit zwei Ringnuten und in diesen gehaltenen, gummielastischen Ringen versehen, die sich im Befestigungszustand der Anhängevorrichtung in den Löchern 2g der beiden Platten 2a und 2b befinden, um durch das radiale Spiel des Bolzens ermöglichte Vibrationen und sonstige radiale Bewegungen zu dämpfen. Andererseits kann der gummielastische Ring 14 eventuell weggelassen werden. Das in den Figuren 12 und 14 ersichtliche Verbindungselement 128 könnte anstelle eines Drahtseils zum Beispiel eine Kette aufweisen.

## Patentansprüche

1. Anhängevorrichtung mit einem zum Befestigen an einem Kraftfahrzeug bestimmten Halter (2) und einer Kugelstange (1), die einen in den Halter (2) einsetzbaren Schaft (1d) besitzt und in einem Befestigungszustand durch einen mindestens einen Halterabschnitt (2a, 2b) des Halters (2) und den Schaft (1d) quer zum letzteren durchdringenden, aus diesem herausnehmbaren Bolzen (3, 103) abnehmbar am Halter (2) befestigt ist, und mit wahlweise in einen Sicherungszustand und in einen Freigabezustand bringbaren Sicherungsmitteln, um den Bolzen (3, 103) im Befestigungszustand der Kugelstange (1) im Sicherungszustand gegen eine Trennung vom Halter (2) sowie vom Schaft (1d) zu sichern und im Freigabezustand eine Trennung des Bolzens (3, 103) vom Schaft (1d) zu ermöglichen, **dadurch gekennzeichnet, dass** die Sicherungsmittel ein verstellbar im Bolzen (3, 103) gehaltenes Sicherungselement (15) aufweisen, das im Sicherungszustand aus diesem herausragt und bei aus dem Schaft (1d) herausgenommenem Bolzen (3, 103) in diesem bleibt.

2. Anhängevorrichtung nach Anspruch 1, **dadurch gekennzeichnet, dass** das Sicherungselement (15) einen Halterabschnitt (2a) des Halters (2) und/oder den Schaft (1d) hintergreift und/oder in den Halter (2) und/oder in den Schaft (1d) eingreift und dass der Bolzen (3, 103) zum Abnehmen der Kugelstange (1) vom Halter (2) zusammen mit dem Sicherungselement (15) in der Längsrichtung des Bolzens (3, 103) aus dem Halter (2) heraus bewegbar ist.

3. Anhängevorrichtung nach Anspruch 1 oder 2, **dadurch gekennzeichnet, dass** der Bolzen (3, 103) eine Bolzenachse (3a) sowie ein zu dieser paralleles erstes Loch (3b, 103b) und ein quer zu diesem verlaufendes, in dieses mündendes, zweites Loch (11g, 111g) aufweist, dass das Sicherungselement (15) im zweiten Loch (11g, 111g) entlang von diesem verschiebbar und durch einen Anschlag (11m) gegen ein Herausfallen aus dem zweiten Loch (11g, 111g) und aus dem Bolzen (3, 103) gesichert ist, dass ein im ersten Loch (3b, 103b) entlang von diesem verstellbares Stellglied (22) vorhanden und ausgebildet ist, um das Sicherungselement (15) im zweiten Loch (11g, 111g) vom Freigabezustand nach aussen in den Sicherungszustand zu verschieben und in diesem zu halten, wobei das Sicherungselement (15) vorzugsweise aus einer Kugel besteht, wobei das erste Loch (3b, 103b) des Bolzens (3, 103) vorzugsweise koaxial zur Bolzenachse (3a) ist, wobei das zweite Loch (11g) des Bolzens (3) vorzugsweise radial zur Bolzenachse (3a) ist, wobei das zweite Loch (11g, 111g) vorzugsweise in eine zylindrische Umfangsfläche des Bolzens (3, 103) mündet und das Sicherungselement (15) vorzugsweise derart bemessen und im Bolzen (3, 103) verstellbar ist, dass es sich im Freigabezustand vollständig innerhalb einer von der zylindrischen Umfangsfläche definierten, zylindrischen Hüllfläche (11a) befindet, wobei das erste Loch (3b, 103b) des Bolzens (3, 103) vorzugsweise einen zylindrischen Abschnitt (11d, 111d) mit einem Durchmesser *d*_{*1*} hat, wobei das zweite Loch (11g, 111g) des Bolzens (3, 103) vorzugsweise ein Sackloch ist und einen bei einer inneren Mündung des zweiten Lochs (11g, 111g) einen in den zylindrischen Abschnitt (11d, 111d) des ersten Loches (3b, 103b) mündenden, zylindrischen Abschnitt mit einem Durchmesser *d*_{*2*} hat, der grösser als der Durchmesser *d*_{*1*} ist, wobei das Sicherungselement (15) in einem quer zum zweiten Loch (11g, 111g) verlaufenden Querschnitt vorzugsweise einen Durchmesser hat, der grösser als der Durchmesser *d*_{*1*} und mindestens annähernd gleich dem Durchmesser *d*_{*2*} ist, so dass der Bolzen (3, 103) bei der Verbindung des ersten Lochs (3b, 103b) mit dem zweiten Loch (11g, 111g) einen inneren Anschlag (11n) für das Sicherungselement (15) bildet.

4. Anhängevorrichtung nach einem der Ansprüche 1 bis 3, **dadurch gekennzeichnet, dass** der Halter (2) zwei einander in Abstand gegenüber stehende, je mit einem durchgehenden Loch (2g, 2h) versehene Halterabschnitte (2a, 2b) und ein sich mindestens zum Teil zwischen diesen befindendes, fest mit diesen verbundenes Halteorgan (2d) aufweist, dass der Schaft (1d) eine Schaftachse (1e) und ein zu dieser senkrechtes, durchgehendes Loch (1h) besitzt, dass die Löcher (2g, 2h) der beiden Halterabschnitte (2a, 2b) miteinander fluchten, dass der Bolzen (3, 103) im Befestigungszustand die Löcher (2g, 2h) der beiden Halterabnitte (2a, 2b) und das Loch (1h) des Schafts (1d) durchdringt und dass der Bolzen (3, 103) einen aussen an einem der Halterabschnitte (2a, 2b) anstehenden Halter-Anschlag (12g, 14) hat.

5. Anhängevorrichtung nach Anspruch 4, **dadurch gekennzeichnet, dass** das Sicherungselement (15) im Sicherungszustand denjenigen der beiden einander gegenüber stehenden Halterabschnitte (2a, 2b) hintergreift, an dem der Halter-Anschlag (12g, 14) des Bolzens (3, 103) ansteht.

6. Anhängevorrichtung nach Anspruch 4 oder 5, **dadurch gekennzeichnet, dass** der Schaft (1d) ein freies Ende (1k) und einen in dieses mündenden Einschnitt (1m) hat, so dass der Schaft (1d) mit dem Einschnitt (1m) über das Halteorgan (2d) schiebbar ist und dieses im Befestigungszustand zusammen mit dem Bolzen (3, 103) die Lage der Kugelstange (1) bezüglich des Halters (2) definiert.

7. Anhängevorrichtung nach einem der Ansprüche 4 bis 6, **dadurch gekennzeichnet, dass** der Bolzen (3, 103) einen zylindrischen Abschnitt, der im Befestigungszustand mit höchstens kleinem radialem Spiel die Löcher (2g, 2h, 1h) in den beiden Halterabschnitten (2a, 2b) und im Schaft (1d) durchdringt, und eine Mantelfläche hat, von der mindestens ein sich zwischen den beiden Halterabschnitten (2a, 2b) befindender Teil, abgesehen von einem allenfalls in sie mündenden, zum Aufnehmen des Sicherungselements (15) dienenden Loch (11g), vollständig zylindrisch sowie glatt ist, und dass der Bolzen (3, 103) eine an ein Ende des genannten zylindrischen Abschnitts anschliessende, ringförmige, von diesem weg nach aussen ragende Schulter (12g) hat, die mindestens einen Teil des Halter-Anschlags (12g, 14) bildet und beispielsweise mit einem zum Anliegen an der Platte (2a) bestimmten, gummielastischen Ring (14) versehen ist, wobei der Bolzen (3, 103) vorzugsweise einen Griff (12d, 112d) aufweist, der sich im Befestigungszustand auf der gleichen Seite des Halters (2) befindet wie der Halter-Anschlag (12g, 14), wobei die Sicherungsmittel vorzugsweise einen federnden Clip (127) und ein mindestens zum Teil flexibles, zum Beispiel ein Drahtseil oder eine Kette besitzendes Verbindungselement (128) aufweisen, das den Clip (127) mit einem im Befestigungszustand beim Halter-Anschlag (12g, 14), aus dem Halter (2) herausragenden Abschnitt des Bolzens (103) verbindet, und wobei der Bolzen (103) vorzugsweise einen im Befestigungszustand auf der dem Halter-Anschlag (12g, 14) abgewandten Seite des Halters (2) aus diesem herausragenden Abschnitt mit einem Loch (111g) zum lösbaren Halten des Clips (127) hat.

8. Anhängevorrichtung nach einem der Ansprüche 1 bis 7 **dadurch gekennzeichnet, dass** die Sicherungsmittel ein Schloss (20) und einen Schlüssel (23,123) aufweisen, dass das Schloss (20) eine drehbar und axial unverschiebbar im Bolzen (3,103) gehaltene, in Wirkverbindung mit dem Sicherungselement (15) stehende Hülse (21) sowie in dieser gehaltene, durch Einstecken und Herausziehen des Schlüssels (23,123) radial verstellbare Sperrteile (24) aufweist, die im Sicherungszustand bei vom Schloss (20) getrenntem Schlüssel (23) aus der Hülse (21) herausragen sowie in mindestens eine Drehsicherungsnut (12o) des Bolzens (3,103) eingreifen und die Hülse (21) unverdrehbar mit dem Bolzen (3) verbinden und beim Einstecken des Schlüssels (23,123) aus der bzw. jeder Drehsicherungsnut (12o) herausgelangen, so dass die Hülse (21) durch den Schlüssel (23,123) drehbar ist und das Sicherungselement (15) durch Drehen des Schlüssels (23,123) vom Sicherungszustand in den Freigabezustand und umgekehrt gebracht werden kann.

9. Anhängevorrichtung nach Anspruch 3 und 8, **dadurch gekennzeichnet, dass** die Hülse (21) des Schlosses (20) im ersten Loch (3b, 103b) des Bolzens (3, 103) gehalten ist, dass das Stellglied (22) stiftförmig ausgebildet ist, sich mindestens zum Teil in der Hülse (21) befindet und einen Nocken (22a) aufweist, der einen wendelformigen Schlitz (21h) in der Hülse (21) durchdringt, und dass das erste Loch (3b, 103b) des Bolzens (3, 103) mit einer axialen Führungsnut (12p) versehen ist, in der ein aus der Hülse (21) hinausragender Teil des Nockens (22a) geführt ist, so dass die Führungsnut (12p) das Stellglied (22) bei einer Drehung der Hülse (21) bezüglich des Bolzens (3, 103) unverdrehbar und axial verschiebbar fuhrt und das Stellglied (22) durch die Drehung parallel zur Bolzenachse (3a) verschoben wird.

10. Anhängevorrichtung nach Anspruch 9, **dadurch gekennzeichnet, dass** der Bolzen (3,103) einen im Allgemeinen zylindrischen, metallischen Bolzenteil (11,111) und einen fest mit dem im Allgemeinen zylindrischen Bolzenteil (11,111) verbundenes aus einem anderen Werkstoff bestehendes, durch Giessen hergestelltes Endstuck (12, 112) hat, dass der im Allgemeinen zylindrische Bolzenteil (11, 111) im Befestigungszustand den Schaft (1d) und den Halterabschnitt (2a, 2b) des Halters (2) durchdringt sowie einen Teil (11b) des ersten Lochs (3b, 103b) und das zweite Loch (11g, 111g) begrenzt und dass das Endstück (12, 112) einen Teil des ersten Lochs (3b, 103b) sowie die bzw. jede Drehsicherungsnut (12o) sowie die axiale Führungsnut (12p) aufweist und mindestens einen Teil der Hülse (21) des Schlosses (20) enthält und einen Griff (12d), 112d) bildet, wobei der im Allgemeinen zylindrische Bolzenteil (11, 111) zum Beispiel aus Stahl und das Endstück (12, 112) zum Beispiel aus Kunststoff oder aus einer metallischen Druckgusslegierung bestehen.

11. Verfahren zur Herstellung einer Anhängevorrichtung nach einem der Ansprüche 1 bis 10, **dadurch gekennzeichnet, dass** ein im Allgemeinen zylindrischer, metallischer Bolzenteil (11, 111) mit einer Bolzenachse (3a) von einer zylindrischen Stange abgetrennt und durch spanabhebende Bearbeitung mit einem zur Bolzenachse (3a) parallelen Loch (11b, 111b) und mit einem quer zu diesem verlaufenden, in dieses mündenden, zum Führen des Sicherungselements (15) dienenden Loch (11g, 111g) versehen wird und dass durch Giessen ein Endstück (12, 112) hergestellt und starr mit dem im Allgemeinen zylindrischen Bolzenteil (11, 111) verbunden wird und ein Loch (12b) zum Halten von Teilen einer Stellvorrichtung (19) zum Verstellen des Sicherungselements (15), einen Griff (12d, 112d) und mindestens einen Teil eines im Befestigungszustand zum Anstehen am Halter (2) bestimmten Halter-Anschlags (12g, 14) aufweist, wobei der Griff (12d, 112d) und der Halter-Anschlag (12g, 14) mindestens bei einem Teil des Umfangs des im Allgemeinen zylindrischen Bolzenteils (11, 111) in radialer Richtung über diesen hinausragen.

12. Verfahren nach Anspruch 11, **dadurch gekennzeichnet, dass** der im Allgemeinen zylindrische Bolzenteil (11, 111) aus Stahl, zum Beispiel aus legiertem Stahl, und das Endstück aus einem andern Werkstoff, zum Beispiel Kunststoff oder einer Zink und Aluminium enthaltenden Druckgusslegierung bestehen.

## Claims

1. Towing device comprising a holder (2) intended for fastening to a motor vehicle and a ball rod (1) which has a shaft (1d) which can be inserted into the holder (2) and, in a fastening state, is removably fastened to the holder (2) by a bolt (3, 103) passing through at least one holder section (2a, 2b) of the holder (2) and the shaft (1d) transversely to the latter and removable therefrom, and comprising securing means which can be brought either into a securing state or into a release state in order to secure the bolt (3, 103) in the fastening state of the ball rod (1), in the securing state, to prevent separation from the holder (2) and from the shaft (1d) and to permit separation of the bolt (3, 103) from the shaft (1d) in the release state, **characterized in that** the securing means have a securing element (15) which is held adjustably in the bolt (3, 103) and projects therefrom in the securing state and, when the bolt (3, 103) is removed from the shaft (1d), remains in said bolt.

2. Towing device according to Claim 1, **characterized in that** the securing element (15) grips behind a holder section (2a) of the holder (2) and/or the shaft (1d) and/or engages the holder (2) and/or the shaft (1d), and that, for removing the ball rod (1) from the holder (2), the bolt (3, 103) can be moved out of the holder (2) together with the securing element (15) in the longitudinal direction of the bolt (3, 103).

3. Towing device according to Claim 1 or 2, **characterized in that** the bolt (3, 103) has a bolt axis (3a) and a first hole (3b, 103b) parallel to said bolt axis and a second hole (11g, 111g) transverse to said first hole and opening into said first hole, that the securing element (15) is displaceable in the second hole (11g, 111g) along said hole and is secured by a stop (11m) to prevent it from falling out of the second hole (11g, 111g) and out of the bolt (3, 103), that an actuator (22) adjustable along said first hole is present and is formed for displacing the securing element (15) in the second hole (11g, 111g) from the release state outwards into the securing state and for holding it therein, the securing element (15) preferably consisting of a ball, the first hole (3b, 103b) of the bolt (3, 103) preferably being coaxial with the bolt axis (3a), the second hole (11g) of the bolt (3) preferably being radial relative to the bolt axis (3a), the second hole (11g, 111g) preferably opening into a cylindrical circumferential surface of the bolt (3, 103) and the securing element (15) preferably being dimensioned and adjustable in the bolt (3, 103) so that, in the release state, it is present completely within a cylindrical envelope surface (11a) defined by the cylindrical circumferential surface, the first hole (3b, 103b) of the bolt (3, 103) preferably having a cylindrical section (11d, 111d) having a diameter d₁, the second hole (11g, 111g) of the bolt (3, 103) preferably being a blind hole and, with an internal opening of the second hole (11g, 111g), having a cylindrical section opening into the cylindrical section (11d, 111d) of the first hole (3b, 103b) and having a diameter d₂ which is greater than the diameter d₁, the securing element (15), in a cross-section transverse to the second hole (11g, 111g), preferably having a diameter which is greater than the diameter d₁ and at least approximately equal to the diameter d₂ so that, when the first hole (3b, 103b) is connected to the second hole (11g, 111g), the bolt (3, 103) forms an internal stop (11n) for the securing element (15).

4. Towing device according to any of Claims 1 to 3, **characterized in that** the holder (2) has two holder sections (2a, 2b) opposite one another a distance apart and each provided with a through-hole (2g, 2h), and having a retaining member (2d) present at least partly between said holder sections and connected firmly thereto, that the shaft (1d) has a shaft axis (1e) and a through-hole (1h) perpendicular to said axis, that the holes (2g, 2h) of the two holder sections (2a, 2b) are flush with one another, that the bolt (3, 103), in the fastening state, passes through the holes (2g, 2h) of the two holder sections (2a, 2b) and the hole (1h) of the shaft (1h) of the shaft (1d), and that the bolt (3, 103) has a holder stop (12g, 14) resting against the outside of one of the holder sections (2a, 2b).

5. Towing device according to Claim 4, **characterized in that**, in the securing state, the securing element (15) grips behind that holder section of the two holder sections (2a, 2b) opposite one another against which the holder stop (12g, 14) of the bolt (3, 103) rests.

6. Towing device according to Claim 4 or 5, **characterized in that** the shaft (1d) has a free end (1k) and an incision (1m) opening into said free end so that the shaft (1d) with the incision (1m) can be pushed over the retaining member (2d) and, in the fastening state, this together with the bolt (3, 103) defines the position of the ball rod (1) relative to the holder (2).

7. Towing device according to any of Claims 4 to 6, **characterized in that** the bolt (3, 103) has a cylindrical section, which, in the fastening state, passes with at most little radial play through the holes (2g, 2h, 1h) in the two holder sections (2a, 2b) and in the shaft (1d), and a lateral surface, of which at least a part present between the two holder sections (2a, 2b), apart from any hole (11g) opening into said section and serving for receiving the securing element (15), is completely cylindrical and smooth, and that the bolt (3, 103) has an annular shoulder (12g) which is adjacent to one end of said cylindrical section, projects outwards away therefrom and forms at least a part of the holder stop (12g, 14) and is provided, for example, with a rubber-elastic ring (14) intended for resting against the plate (2a), the bolt (3, 103) preferably having a handle (12d, 112d) which, in the fastening state, is present on the same side of the holder (2) as the holder stop (12g, 14), the securing means preferably having a springy clip (127) and an at least partly flexible connecting element (128) which has, for example, a wire cable or a chain and connects the clip (127) to a section of the bolt (103) which projects from the holder (2) at the holder stop (12g, 14) in the fastening state, and the bolt (103) preferably having a section which, in the fastening state, is present on that side of the holder (2) which faces away from the holder stop (12g, 14) and projects from said holder and has a hole (111q) for detachably holding the clip (127).

8. Towing device according to any of Claims 1 to 7, **characterized in that** the securing means have a lock (20) and a key (23, 123), that the lock (20) has a sleeve (21), which is held rotatably and axially nondisplaceably in the bolt (3, 103) and has an operative connection with the securing element (15), and locking parts (24) which are held in said sleeve, are radially adjustable by inserting and removing the key (23, 123) and, in the securing state, when the key (23) is separated from the lock (20), project from the sleeve (21) and engage at least one rotation-preventing groove (12o) of the bolt (3, 103) and connect the sleeve (21) nonrotatably to the bolt (3) and, when the key (23, 123) is inserted, leave the or each rotation-preventing groove (12o) so that the sleeve (21) is rotatable by means of the key (23, 123) and the securing element (15) can be brought from the securing state into the release state and vice versa by turning the key (23, 123).

9. Towing device according to Claims 3 and 8, **characterized in that** the sleeve (21) of the lock (20) is held in the first hole (3b, 103b) of the bolt (3, 103), that the actuator (22) is in the form of a pin, is present at least partly in the sleeve (21), and has a cam (22a) which passes through a helical slot (21h) in the sleeve (21), and that the first hole (3b, 103b) of the bolt (3, 103) is provided with an axial guide groove (12p) in which a part of the cam (22a) which projects from the sleeve (21) is guided so that, on rotation of the sleeve (21) relative to the bolt (3, 103), the guide groove (12b) guides the actuator (22) nonrotatably and in an axially displaceable manner and the actuator (22) is displaced parallel to the bolt axis (3a) by the rotation.

10. Towing device according to Claim 9, **characterized in that** the bolt (3, 103) has a generally cylindrical, metallic bolt part (11, 111) and an end piece (12, 112) firmly connected to the generally cylindrical bolt part (11, 111), consisting of a different material and produced by casting, that the generally cylindrical bolt part (11, 111), in the fastening state, passes through the shaft (1d) and the holder section (2a, 2b) of the holder (2) and bounds a part (11b) of the first hole (3b, 103b) and bounds the second hole (11g, 111g), and that the end piece (12, 112) has a part of the first hole (3b, 103b) and the or each rotation-preventing groove (12o) and the axial guide groove (12p) and contains at least a part of the sleeve (21) of the lock (20) and forms a handle (12d), the generally cylindrical bolt part (11, 111) consisting, for example, of steel and the end piece (12, 112) consisting, for example, of plastic or of a metallic die-cast alloy.

11. Method of manufacturing a towing device according to any of Claims 1 to 10, **characterized in that** a generally cylindrical, metallic bolt part (11, 111) having a bolt axis (3a) is separated from a cylindrical rod and is provided, by cutting, with a hole (11b, 111b) parallel to the bolt axis (3a) and with a hole (11g, 111g) transverse to said hole (11b, 111b), opening into said hole (11b, 111b) and serving for guiding the securing element (15), and that an end piece (12, 112) is produced by casting and is connected rigidly to the generally cylindrical bolt part (11, 111) and has a hole (12b) for holding parts of an adjusting device (19) for adjusting the securing element (15), a handle (12d, 112d) and at least a part of a holder stop (12g, 14) intended for resting against a holder (2) in the fastening state, the handle (12d, 112d) and the holder stop (12g, 14) at least in a part of the circumference of the generally cylindrical bolt part (11, 111), projecting beyond said bolt part in the radial direction.

12. Method according to Claim 11, **characterized in that** the generally cylindrical bolt part (11, 111) consists of steel, for example of alloyed steel, and the end piece consists of a different material, for example plastic or a zinc- and aluminium-containing die-cast alloy.

## Revendications

1. Dispositif de remorquage, avec un support (2) destiné à être fixé sur un véhicule automobile et avec une barre à boule (1) qui possède un corps (1d) pouvant être inséré dans le support (2) et qui, dans un état de fixation, est fixée au support (2) de façon détachable par un boulon (3, 103) qui traverse au moins une partie de support (2a, 2b) du support (2) et le corps (1d) transversalement à ce dernier et qui peut en être retiré, et avec des moyens de blocage pouvant être amenés sélectivement dans un état de blocage et dans un état de libération afin, dans l'état de blocage, de bloquer le boulon (3, 103) de la barre à boule (1) fixée pour l'empêcher d'être séparé du support (2) et du corps (1d), et, dans l'état de libération, de permettre au boulon (3, 103) d'être séparé du corps (1d), **caractérisé en ce que** les moyens de blocage présentent un élément de blocage (15) maintenu à déplacement dans le boulon (3, 103), élément qui dépasse hors du boulon (3, 103) dans l'état de blocage et qui reste dans le boulon (3, 103) lorsque ce dernier est retiré du corps (1d).

2. Dispositif de remorquage selon la revendication 1, **caractérisé en ce que** l'élément de blocage (15) s'engage derrière une partie de support (2a) du support (2) et/ou derrière le corps (1d), et/ou dans le support (2) et/ou dans le corps (1d), et **en ce que** le boulon (3, 103), afin de détacher la barre à boule (1) du support (2), peut être déplacé hors du support (2) dans la direction longitudinale du boulon (3, 103), conjointement avec l'élément de blocage (15).

3. Dispositif de remorquage selon la revendication 1 ou 2, **caractérisé en ce que** le boulon (3, 103) présente un axe de boulon (3a) ainsi qu'un premier trou (3b, 103b) parallèle à cet axe et un deuxième trou (11g, 111g) s'étendant transversalement au premier trou et débouchant dans ce premier trou, **en ce que** l'élément de blocage (15) peut coulisser dans le deuxième trou (11g, 111 g) le long de celui-ci et est empêché par une butée (11m) de tomber hors du deuxième trou (11g, 111g) et hors du boulon (3, 103), **en ce qu'**un organe d'actionnement (22) est présent dans le premier trou (3b, 103b), organe qui est mobile le long de ce premier trou et est conçu pour déplacer l'élément de blocage (15) vers l'extérieur dans le deuxième trou (11g, 11g) de l'état de libération dans l'état de blocage et le maintenir dans cet état, l'élément de blocage (15) consistant de préférence en une bille, le premier trou (3b, 103b) du boulon (3, 103) étant de préférence coaxial à l'axe (3a) du boulon, le deuxième trou (11g) du boulon (3) étant de préférence radial à l'axe (3 a) du boulon, le deuxième trou (11g, 111g) débouchant de préférence dans une face circonférentielle cylindrique du boulon (3, 103) et l'élément de blocage (15) étant de préférence dimensionné, et mobile dans le boulon (3, 103), de telle sorte qu'il se trouve dans l'état de libération en totalité à l'intérieur d'une surface d'enveloppe cylindrique (11a) définie par la face circonférentielle cylindrique, le premier trou (3b, 103b) du boulon (3, 103) possédant de préférence une partie cylindrique (11d, 111d) de diamètre *d1*, le deuxième trou (11g, 111g) du boulon (3, 103) étant de préférence un trou borgne et possédant, à une embouchure intérieure du deuxième trou (11g, 111g), une partie cylindrique de diamètre *d2* supérieur au diamètre *d1*, débouchant dans la partie cylindrique (11d, 111d) du boulon (3, 103), l'élément de blocage (15) possédant de préférence, dans une coupe transversale s'étendant transversalement au deuxième trou (11g, 111g), un diamètre qui est supérieur au diamètre *d1* et au moins approximativement égal au diamètre *d2*, de sorte que le boulon (3, 103) forme, à la réunion du premier trou (3 b, 103 b) et du deuxième trou (11g, 111g), une butée intérieure (11n) pour l'élément de blocage (15).

4. Dispositif de remorquage selon l'une des revendications 1 à 3, **caractérisé en ce que** le support (2) présente deux parties de support (2a, 2b), se faisant face à distance mutuelle et pourvues chacune d'un trou débouchant (2g, 2h), et un organe de maintien (2d) se trouvant au moins partiellement entre ces parties et assemblé fixement à celles-ci, **en ce que** le corps (1d) possède un axe de corps (1e) et un trou débouchant (1h) perpendiculaire à cet axe, **en ce que** les trous (2g, 2h) des deux parties de support (2a, 2b) sont mutuellement alignés, **en ce que** le boulon (3, 103), dans l'état de fixation, traverse les trous (2g, 2h) des deux parties de support (2a, 2b) et le trou (1h) du corps (1d), et **en ce que** le boulon (3, 103) possède une butée de support (12g, 14) s'appliquant extérieurement contre une des parties de support (2a, 2b).

5. Dispositif de remorquage selon la revendication 4, **caractérisé en ce que** l'élément de blocage (15), dans l'état de blocage, s'engage derrière celle des deux parties de support (2a, 2b) en vis-à-vis contre laquelle s'applique la butée de support (12g, 14) du boulon (3, 103).

6. Dispositif de remorquage selon la revendication 4 ou 5, **caractérisé en ce que** le corps (1d) possède une extrémité libre (1k) et une encoche (1m) débouchant dans celle-ci, de sorte que l'encoche (1m) du corps (1d) peut être poussée sur l'organe de maintien (2d) et que cet organe, dans l'état de fixation, définit conjointement avec le boulon (3, 103) la position de la barre à boule (1) par rapport au support (2).

7. Dispositif de remorquage selon l'une des revendications 4 à 6, **caractérisé en ce que** le boulon (3, 103) possède une partie cylindrique, qui dans l'état de fixation traverse avec un jeu radial extrêmement faible les trous (2g, 2h, 1h) des deux parties de support (2a, 2b) et du corps (1d), et qui possède une surface extérieure dont au moins une partie se trouvant entre les deux parties de support (2a, 2b) est, à l'exception d'un trou (11g) débouchant éventuellement dans elle et destiné à recevoir l'élément de blocage (15), entièrement cylindrique et lisse, et **en ce que** le boulon (3, 103) possède un épaulement annulaire (12g) se raccordant à une extrémité de la partie cylindrique précitée et dépassant de celle-ci vers l'extérieur, épaulement qui constitue au moins une partie de la butée de support (12g, 14) et est par exemple pourvu d'un anneau caoutchouteux (14) destiné à s'appliquer contre la plaque (2a), le boulon (3, 103) présentant de préférence une poignée (12d, 112d) qui se trouve, dans l'état de fixation, du même côté du support (2) que la butée de support (12g, 14), les moyens de blocage présentant de préférence un clip (127) à élasticité de ressort et un élément de liaison (128) au moins partiellement flexible, possédant de préférence un câble métallique ou une chaîne, qui relie le clip (127) au niveau de la butée de support (12g, 14) à une partie du boulon (103) qui, dans l'état de fixation, dépasse hors du support (2), et le boulon (103) possédant de préférence une partie, dépassant dans l'état de fixation hors du support (2) sur le côté opposé à la butée de support (12g, 14), qui est pourvue d'un trou (111q) pour maintenir de façon détachable le clip (127).

8. Dispositif de remorquage selon l'une des revendications 1 à 7, **caractérisé en ce que** les moyens de blocage présentent une serrure (20) et une clé (23, 123), **en ce que** la serrure (20) présente une douille (21) maintenue à rotation et en fixité axiale dans le boulon (3, 103) et fonctionnellement reliée à l'élément de blocage (15), ainsi que des éléments de verrouillage (24) maintenus dans cette douille et pouvant être déplacés radialement par l'insertion et l'extraction de la clé (23, 123), éléments qui, dans l'état de blocage, lorsque la clé (23) est retirée de la serrure (20), dépassent hors de la douille (21) et s' engagent dans au moins une rainure (12o) de blocage en rotation du boulon (3, 103), liant ainsi la douille (21) sans possibilité de rotation au boulon (3), et éléments qui, lors de l'insertion de la clé (23, 123), sortent de la ou de chaque rainure (12o) de blocage en rotation, de sorte que la douille (21) peut être tournée par la clé (23, 123) et que l'élément de blocage (15) peut être, en faisant tourner la clé (23, 123), amené de l'état de blocage dans l'état de libération et vice versa.

9. Dispositif de remorquage selon les revendications 3 et 8, **caractérisé en ce que** la douille (21) de la serrure (20) est maintenue dans le premier trou (3b, 103b) du boulon (3, 103), **en ce que** l'organe d'actionnement (22) est réalisé en forme de tige, se trouve au moins pour partie dans la douille (21) et présente un ergot (22a) qui traverse une fente en hélice (21h) dans la douille (21), et **en ce que** le premier trou (3b, 103b) du boulon (3, 103) est pourvu d'une rainure de guidage axiale (12p) dans laquelle est guidée une partie de l'ergot (22a) qui dépasse hors de la douille (21), de sorte que la rainure de guidage (12p), lors d'une rotation de la douille (21) par rapport au boulon (3, 103), guide l'organe d'actionnement (22) en déplacement axial et sans possibilité de rotation, l'organe d'actionnement (22) étant déplacé par cette rotation parallèlement à l'axe (3a) du boulon.

10. Dispositif de remorquage selon la revendication 9, **caractérisé en ce que** le boulon (3, 103) possède une partie de boulon métallique (11, 111) globalement cylindrique et un embout (12, 112) réalisé par moulage en un autre matériau et fixement assemblé à la partie de boulon (11, 111) globalement cylindrique, **en ce que** la partie de boulon (11, 111) globalement cylindrique, dans l'état de fixation, traverse le corps (1d) ainsi que la partie de support (2a, 2b) du support (2) et délimite une partie (11b) du premier trou (3b, 103b) ainsi que le deuxième trou (11g, 111g), et **en ce que** l'embout (12, 112) présente une partie du premier trou (3b, 103b) ainsi que la ou chaque rainure (12o) de blocage en rotation et que la rainure de guidage axiale (12p), et contient au moins une partie de la douille (21) de la serrure (20) et forme une poignée (12d, 112d), la partie de boulon (11, 111) globalement cylindrique étant par exemple réalisée en acier et l'embout (12, 112) par exemple en matière plastique ou en un alliage métallique moulé sous pression.

11. Procédé de fabrication d'un dispositif de remorquage selon l'une des revendications 1 à 10, **caractérisé en ce qu'**une partie de boulon métallique (11, 111) globalement cylindrique présentant un axe de boulon (3a) est détachée d'une barre cylindrique et est dotée par usinage par enlèvement de matière d'un trou (11b, 111b) parallèle à l'axe (3a) du boulon et d'un trou (11g, 111g) s'étendant transversalement au précédent, débouchant dans celui-ci et servant à guider l'élément de blocage (15), et **en ce qu'**un embout (12, 112) est fabriqué par moulage, est assemblé rigidement à la partie de boulon (11, 111) globalement cylindrique et présente un trou (12b) pour maintenir des parties d'un dispositif d'actionnement (19) destiné à déplacer l'élément de blocage (15), une poignée (12d, 112d) et au moins une partie d'une butée de support (12g, 14) destinée à s'appliquer contre le support (2) dans l'état de fixation, la poignée (12d, 112d) et la butée de support (12g, 14), au moins sur une partie de la circonférence de la partie de boulon (11, 111) globalement cylindrique, dépassant de celle-ci en direction radiale.

12. Procédé selon la revendication 11, **caractérisé en ce que** la partie de boulon (11, 111) globalement cylindrique est réalisée en acier, par exemple en acier allié, et l'embout en un autre matériau, par exemple en matière plastique ou en un alliage moulé sous pression contenant du zinc et de l'aluminium.
